# EUROPÄISCHE PATENTSCHRIFT

(11) **EP 1 263 307 B1**
(45) Veröffentlichungstag und Bekanntmachung des Hinweises auf die Patenterteilung: **03.11.2004**
(21) Anmeldenummer: 01905808.0
(22) Anmeldetag: 20.02.2001
(51) Int. Cl.: A47J 29/00, A47J 37/10

(54) **ELEKTRISCHES EIERKOCHGERÄT**
ELECTRIC EGG BOILER
APPAREIL ELECTRIQUE POUR LA CUISSON DES OEUFS

(30) Priorität: 03.03.2000 DE 10010630
(43) Veröffentlichungstag der Anmeldung: 11.12.2002
(73) Patentinhaber: BSH Bosch und Siemens Hausgeräte GmbH, 81739 München (DE)
(72) Erfinder: DAMRATH, Joachim, 89429 Bachhagel (DE)
(86) Internationale Anmeldenummer: PCT/EP2001/001908
(87) Internationale Veröffentlichungsnummer: WO 2001/064086

(56) Entgegenhaltungen:
- DE-A- 2 102 062
- DE-U- 1 891 125
- FR-A- 2 152 654
- FR-A- 2 664 806
- US-A- 3 227 065

## Beschreibung

Die Erfindung betrifft ein elektrisches Eierkochgerät nach dem Oberbegriff des Anspruchs 1 (Siehe zum Beispiel FR-A-2 664 806).

Zum Kochen von Eiern ist es bekannt, diese im heißen Wasserbad oder in einer Dampfatmosphäre zu kochen, um die erforderliche Wärmeenergie auf die Eier zu übertragen. Weiterhin sind durch die DE 1 429 788, DE 733 26 78 U1, DE 1 869 521 U1, DE 1 891 125 U1 und die US 3,227,065 Eierkocher bekannt, bei denen die Wärme in Form von Strahlungswärme oder konvektiver Wärme auf die Eier übertragen wird. Grundsätzlich besteht beim Kochen von Eiern die Gefahr, daß Eiinhalt durch Öffnungen in der Schale austritt und das Eierkochgerät verschmutzt. Öffnungen können beispielsweise durch Risse in der Schale entstehen, wobei u. U. auch durch das kleine üblicherweise vor dem Kochen auf der Seite des Luftpolsters gemachte Loch Eiinhalt austreten kann. Bei all den bekannten Eierkochgeräten besteht in diesem Fall insbesondere der Nachteil, daß durch Eiinhalt verschmutzte Teile des Eierkochgeräts nicht oder nur schlecht gereinigt werden können. Der Grund hierfür ist meistens, daß von der Verschmutzung elektrische Komponenten betroffen sind, die sich schlecht reinigen und/oder schlecht oder nicht zum Reinigen ausbauen lassen.

Der vorliegenden Erfindung liegt die Aufgabe zugrunde, ein Eierkochgerät der eingangs genannten Art zu schaffen, bei dem die Pflege und insbesondere die Reinigung vereinfacht ist.

Erfindungsgemäß wird dies durch einen elektrisches Eierkochgerät erreicht, bei dem alle elektrischen Komponenten des Eierkochgeräts oberhalb der durch die Eiaufnahme bestimmten Eiposition für zu kochende Eier angeordnet sind.

Sollte bei einem erfindungsgemäßen Eierkochgerät Eiinhalt austreten, so würden im wesentlichen mechanische Komponenten des Eierkochgeräts verschmutzt werden. Die mechanischen Komponenten lassen sich im Gegensatz zu den elektrischen jedoch wesentlich einfacher so ausgestalten, daß sie einfach zu reinigen und zur vereinfachten Reinigung auch einfach entnommen werden können.

Dieser Vorteil ergibt sich auch bei einem erfindungsgemäßen Eierkochgerät, bei dem die Eier ohne Schale zubereitet werden und bei denen der Eiinhalt in einer entsprechenden Aufnahme gekocht wird. Auch in diesem Fall besteht die Gefahr, daß Eiinhalt aus der Aufnahme verschüttet wird und andere Teile des Eierkochgeräts verschmutzt.

Weitere vorteilhafte Ausführungsformen sind in den Unteransprüchen beschrieben.

So kann die Heizeinrichtung von dem Typ sein, der Strahlungswärme oder konvektive Wärme abgibt. Bei diesen ohne Wasser oder Dampf arbeitenden Eierkochgeräten besteht eine erhöhte Gefahr, daß durch hohe oder ungleichmäßige Energieübertragung auf die Eier die Eierschale Risse bekommt und Eiinhalt austritt.

Vorteilhafterweise sind die unter- oder neben der Eiposition angeordneten mechanischen Komponenten, die bevorzugt von einer Verschmutzung betroffen sind, wenigstens zum Teil herausnehmbar, was die Reinigung wesentlich vereinfacht. Zusätzlich können die herausnehmbaren mechanischen Komponenten spülmaschinenfest ausgebildet sein, beispielsweise durch Auswahl der geeigneten Materialien oder Oberflächenbeschichtungen. In diesem Fall gestaltet sich die Reinigung besonders einfach, da die verschmutzten Teile nur herausgenommen und in den Geschirrspüler hineingestellt werden müssen, der in den Haushalten zunehmend vorhanden ist.

Bei einem Eierkochgerät mit einem Gehäuseunterteil und einem Gehäuseoberteil können gemäß der erfindungsgemäßen Lösung alle elektrischen Komponenten mit dem Gehäuseoberteil verbunden werden. Beim Aufklappen oder Abnehmen des Gehäuseoberteils verbleiben mit dem Gehäuseunterteil nur noch mechanische Komponenten, die besonders einfach so ausgestaltet sein können, daß sie leicht und insbesondere mit der Spülmaschine zu reinigen sind. Weist das Eierkochgerät eine Einrichtung zum Wenden der Eier während des Kochens auf, so wird erfindungsgemäß ein elektrischer Antrieb für die Eiwendeeinrichtung oberhalb der Eiposition angeordnet.
Insbesondere kann bei einem Eierkochgerät mit einer elektrisch angetriebenen Eiwendeeinrichtung der Antrieb in einem Gehäuseoberteil angeordnet sein und mit der Eiwendeeinrichtung im Gehäuseunterteil so verbunden sein, daß sich diese Verbindung beim Abnehmen oder Aufklappen des Gehäuseoberteils selbständig löst. Dies kann beispielsweise durch eine Steckkupplung zur drehfesten Verbindung erreicht werden, mittels der Antrieb und die Eiwendeeinrichtung verbunden werden können und die ein einfaches Lösen in Längsrichtung ermöglicht.

Weitere Einzelheiten, Merkmale und Vorteile der Erfindung ergeben sich aus der folgenden Beschreibung eines Ausführungsbeispiels eines erfindungsgemäßen Eierkochgeräts unter Bezugnahme auf die Zeichnungen. Darin zeigen:
- Fig. 1: eine schematische seitliche Schnittansicht durch das erfindungsgemäße Eierkochgerät,
- Fig. 2: eine Draufsicht auf das Gehäuseunterteil ohne Eiträger und
- Fig. 3: eine Draufsicht auf den Eierträger.

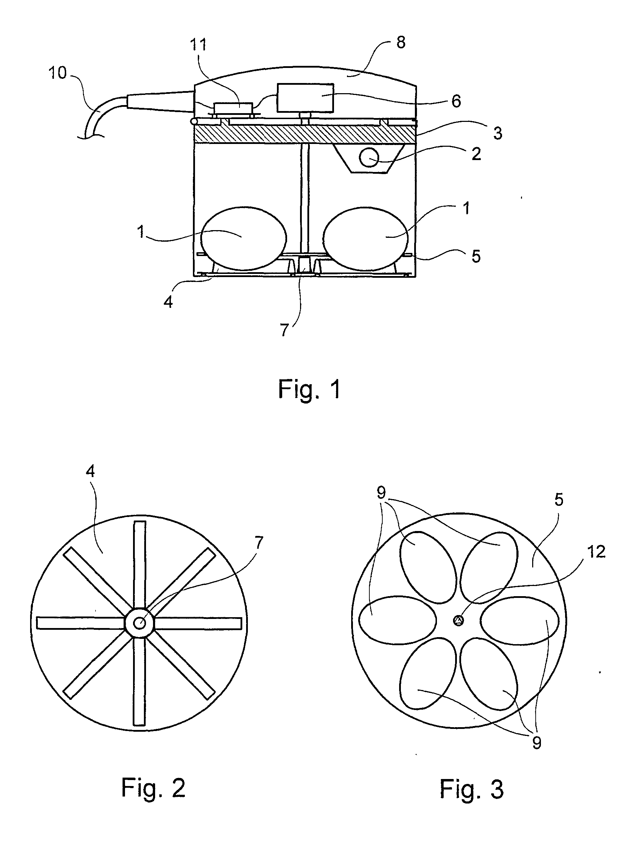

Das in Fig. 1 dargestellte Eierkochgerät umfaßt ein Gehäuseoberteil 8 und ein Gehäuseunterteil 13. In dem Gehäuseunterteil 13 ist eine Einrichtung zum Wenden von zu kochenden Eiern 1 angeordnet, die ein Wendeunterteil 4 und einen Eierträger 5 umfaßt. Das Wendeunterteil 4 besteht aus einer kreisrunden Scheibe auf der sternförmig Wenderippen angeordnet sind, in deren Zentrum eine senkrecht stehende Lagerbuchse 7 angeordnet ist. Das Wendeunterteil 4 liegt lose im Gehäuseunterteil 13, wird von diesem seitlich gehalten und ist herausnehmbar.

Über dem Wendeunterteil 4 befindet sich in der Betriebsposition des Eierkochgeräts ein Eierträger 5 zur Halterung der Eier 1. Der Eierträger 5 umfaßt eine runde Scheibe mit Durchbrüchen 9, die auf einer Kreisbahn angeordnet sind und in denen die Eier 1 so gehalten werden, daß sie unter der Scheibe hervorstehen und mit ihren Längsachsen sternförmig ausgerichtet sind. Der Eierträger 5 umfaßt weiterhin eine Achse 12, die im Zentrum der Scheibe senkrecht befestigt ist. Die Achse 12 weist unterhalb des Eierträgers einen kurzen vorstehenden Abschnitt auf, der drehbar von der Lagerbuchse 7 aufgenommen werden kann. Oberhalb des Eierträgers 5 weist die Achse 12 einen längeren Abschnitt auf, der bis zum Gehäuseoberteil 8 reicht und am oberen Ende einen Kupplungsabschnitt zur Aufnahme eines Gegenstücks zum Antrieb in Drehrichtung aufweist.

Im Gehäuseoberteil 8 ist ein elektrischer Drehantrieb 6 angeordnet, dessen Achse so ausgebildet ist, daß sie auf den Kupplungsabschnitt der Achse 12 aufgesteckt und diese in Drehrichtung antreiben kann. Weiterhin ist an dem Gehäuse 8 unten eine Wärmedämmung 3 befestigt, an der wiederum eine Strahlungswärme abgebende Heizeinrichtung 2 in Form eines Halogenstabs befestigt ist. Für die Steuerung des Antriebs 6 sowie der Heizeinrichtung 2 ist im Gehäuseoberteil 8 eine Steuereinrichtung 11 vorgesehen, die mit einem Anschlußkabel 10 zur Versorgung des Eierkochgeräts mit elektrischer Energie verbunden ist.

Das Gehäuseoberteil 8 ist gelenkig mit dem Gehäuseunterteil 13 verbunden und läßt sich aufklappen, wobei alternativ oder zusätzlich vorgesehen sein kann, daß das Gehäuseoberteil 8 vollständig vom Gehäuseunterteil 13 abgenommen werden kann. Wird das Gehäuseoberteil abgenommen oder aufgeklappt, wird der Antrieb 6 mit seiner Achse von dem Kupplungsabschnitt der Achse 12 abgezogen.

Alle elektrischen Komponenten 2, 6, 10 und 11 sind erfindungsgemäß über der Position der zu kochenden Eier 1 angeordnet. Zusätzlich sind alle elektrischen Komponenten 2, 6, 10 und 11 mit dem Gehäuseoberteil 8 verbunden, so daß sie mit diesem vom Gehäuseunterteil 13 weggeklappt oder ganz abgenommen werden können.

In Fig. 2 ist das Wendeunterteil 4 mit den sternförmig angeordneten Wenderippen und der mittig angeordneten Lagerbuchse 7 dargestellt. In Fig. 3 ist der Eierträger 5 mit den sternförmig auf einer Kreisbahn angeordneten Durchbrüchen 9 und der mittig angeordneten Achse 12 dargestellt.

Zum Kochen der Eier 1 wird von der Steuereinrichtung 11 der Antrieb 6 und die Heizeinrichtung 2 angesteuert, wodurch die Eier 1 durch Drehung des Eierträgers 5 langsam unter der Heizeinrichtung 2 hindurch bewegt und dabei mit Wärmestrahlung beaufschlagt werden. Bei der Drehung des Eierträgers 5 werden die Eier 1 mit ihren unten vorstehenden Abschnitten gegen die Wenderippen auf dem Wendeunterteil 4 geführt, so daß sie von den Wenderippen angehoben werden und über deren Oberkanten abrollen. Auf diese Weise werden die Eier 1 innerhalb der Durchbrüche 9 auch um ihre Längsachse gedreht, so daß die Eier 1 im Laufe des Kochvorgangs von allen Seiten gleichmäßig erwärmt werden.

Wenn nun durch eine Öffnung in der Schale aus den Eiern 1 Inhalt austritt, so werden von der Verschmutzung im wesentlichen die daneben oder darunterliegenden Teile betroffen sein, wie insbesondere der Eierträger 5 und das Wendeunterteil 4, die vorteilhafterweise zur Reinigung insbesondere in einem Geschirrspüler aus dem Eierkochgerät herausgenommen werden können. Wenn das Gehäuseunterteil 13 von dem Gehäuseoberteil 8 getrennt werden kann, kann auch ersteres im Falle einer Verschmutzung leicht gereinigt werden, da es im vorliegenden Ausführungsbeispiel keine elektrischen Komponenten aufweist.

## Patentansprüche

1. Elektrisches Eierkochgerät mit einer Heizeinrichtung (2) und einer Eiaufnahme (5), **dadurch gekennzeichnet, dass** alle elektrischen Komponenten (2, 6, 10, 11) des Eierkochgeräts oberhalb der durch die Eiaufnahme (5) bestimmten Eiposition für zu kochende Eier (1) angeordnet sind.

2. Eierkochgerät nach Anspruch 1, **dadurch gekennzeichnet, dass** die Heizeinrichtung (2) Strahlungswärme oder konvektive Wärme abgibt.

3. Eierkochgerät nach Anspruch 1 oder 2, **dadurch gekennzeichnet, dass** unter oder neben der Eiposition mechanische Komponenten (4, 5) angeordnet sind, von denen wenigstens eine Komponente (4, 5) herausnehmbar ist.

4. Eierkochgerät nach Anspruch 3, **dadurch gekennzeichnet, dass** die wenigstens eine unter oder neben der Eiposition angeordnete und herausnehmbare mechanische Komponente (4, 5) spülmaschinenfest ist.

5. Eierkochgerät nach einem der Ansprüche 1 bis 4, **dadurch gekennzeichnet, dass** das Eierkochgerät ein Gehäuseunterteil und ein abnehmbares oder aufklappbares Gehäuseoberteil (8) aufweist und alle elektrischen Komponenten (2, 6, 10, 11) mit dem Gehäuseoberteil (8) verbunden sind.

6. Eierkochgerät nach einem der Ansprüche 1 bis 5, **dadurch gekennzeichnet, dass** unter oder neben der Eiposition eine Einrichtung (5) zum Wenden wenigstens eines Eis (1) angeordnet ist, der ein elektrischer Antrieb (6) oberhalb der Eiposition zugeordnet ist.

7. Eierkochgerät nach Anspruch 5 und 6, **dadurch gekennzeichnet, dass** der elektrische Antrieb (6) der Eiwendeeinrichtung (5) im Gehäuseoberteil (8) angeordnet und mit der Eiwendeeinrichtung (5) derart über eine Achse drehfest verbunden ist, dass sich die Verbindung beim Abnehmen oder Aufklappen des Gehäuseoberteils (8) selbständig löst.

## Claims

1. Electric egg-cooking appliance with a heater (2) and an egg receiver (5), **characterised in that** all electrical components (2, 6, 10, 11) of the egg-cooking appliance are arranged above the egg position, which is determined by the egg receiver (5), for the eggs (1) to be cooked.

2. Electric egg-cooking appliance according to claim 1, **characterised in that** the heater (2) delivers radiant heat or convection heat.

3. Electric egg-cooking appliance according to claim 1 or 2, **characterised in that** mechanical components (4, 5), of which at least one component (4, 5) is withdrawable, are arranged below or adjacent to the egg position.

4. Electric egg-cooking appliance according to claim 3, **characterised in that** the at least one mechanical component (4, 5) arranged below or adjacent to the egg position and withdrawable is dishwasher-proof.

5. Electric egg-cooking appliance according to one of claims 1 to 4, **characterised in that** the egg-cooking appliance comprises a housing upper part (8) which is removable or pivotable open and all electrical components (2, 6, 10, 11) are connected with the housing upper part (8).

6. Electric egg-cooking appliance according to one of claims 1 to 5, **characterised in that** a device (5), with which an electric drive (6) above the egg position is associated, for turning at least one egg (1) is arranged below or adjacent to the egg position.

7. Electric egg-cooking appliance according to claim 5 and 6, **characterised in that** the electric drive (6) of the egg turning device (5) is arranged in the housing upper part (8) and is so connected with the egg turning device (5) in rotationally fast manner by way of an axle that the connection automatically releases on removal or pivoting open of the housing upper part (8).

## Revendications

1. Appareil de cuisson électrique pour oeufs comprenant un système de chauffage (2) et un logement d'oeuf (5), **caractérisé en ce que** tous les composants électriques (2, 6, 10, 11) de l'appareil de cuisson pour oeufs sont disposés au-dessus de la position d'oeuf définie par le logement d'oeuf (5) pour des oeufs (1) à cuire.

2. Appareil de cuisson pour oeufs selon la revendication 1, **caractérisé en ce que** le système de chauffage (2) dégage de la chaleur de rayonnement ou de la chaleur de convection.

3. Appareil de cuisson pour oeufs selon la revendication 1 ou 2, **caractérisé en ce qu'**au-dessous ou à côté de la position d'oeuf sont disposés des composants mécaniques (4, 5), dont au moins un composant (4, 5) peut être enlevé.

4. Appareil de cuisson pour oeufs selon la revendication 3, **caractérisé en ce que** le au moins un composant mécanique (4, 5) disposé au-dessous ou à côté de la position d'oeuf et pouvant être enlevé est conçu pour résister au lave-vaisselle.

5. Appareil de cuisson pour oeufs selon l'une quelconque des revendications 1 à 4, **caractérisé en ce que** l'appareil de cuisson pour oeufs présente une partie inférieure de boîtier et une partie supérieure de boîtier (8) pouvant être enlevée ou relevée et tous les composants électriques (2, 6, 10, 11) sont reliés à la partie supérieure de boîtier (8).

6. Appareil de cuisson pour oeufs selon l'une quelconque des revendications 1 à 5, **caractérisé en ce qu'**un dispositif (5) pour le retournement d'au moins un oeuf (1) est disposé au-dessous ou à côté de la position d'oeuf, dispositif auquel est attribué un entraînement (6) électrique au-dessus de la position d'oeuf.

7. Appareil de cuisson pour oeufs selon les revendications 5 et 6, **caractérisé en ce que** l'entraînement électrique (6) du dispositif de retournement pour oeuf (5) est disposé dans la partie supérieure de boîtier (8) et relié de façon solidaire en rotation au dispositif de retournement pour oeuf (5) au moyen d'un axe, de telle sorte que la liaison se détache spontanément lors de l'enlèvement ou du relèvement de la partie supérieure de boîtier (8).
